# EUROPÄISCHE PATENTSCHRIFT

(11) **EP 4 367 440 B1**
(45) Veröffentlichungstag und Bekanntmachung des Hinweises auf die Patenterteilung: **01.10.2025**
(21) Anmeldenummer: 22731064.6
(22) Anmeldetag: 01.06.2022
(51) Int. Cl.: F23D 14/22, F23D 14/32, F23D 14/66, F23D 14/78

(54) **BRENNER ZUM DURCHFÜHREN EINER PARTIELLEN OXIDATION**
BURNER FOR PERFORMING PARTIAL OXIDATION
BRÛLEUR POUR EFFECTUER UNE OXYDATION PARTIELLE

(30) Priorität: 05.07.2021 EP 21020351
(43) Veröffentlichungstag der Anmeldung: 15.05.2024
(73) Patentinhaber: Linde GmbH, 82049 Pullach (DE)
(72) Erfinder: MIHAILOWITSCH, Dieter, 82049 Pullach (DE); MURER, Martin, 82049 Pullach (DE)
(74) Vertreter: Lu, Jing
(86) Internationale Anmeldenummer: PCT/EP2022/025257
(87) Internationale Veröffentlichungsnummer: WO 2023/280433

(56) Entgegenhaltungen:
- US-A- 3 255 966
- US-A- 4 726 763
- US-A1- 2006 141 413

## Beschreibung

Die Erfindung betrifft einen Brenner zum Durchführen einer partiellen Oxidation mit wenigstens zwei Kanälen, durch welche zum Durchführen der partiellen Oxidation jeweils ein Fluid strömbar ist.

### Hintergrund der Erfindung

Im Zuge einer partiellen Oxidation kann ein kohlenwasserstoffhaltiger Brennstoff, z.B. Erdgas, Erdölgas oder Heizgas, mit einem Oxidationsmittel beispielsweise in Form eines sauerstoffhaltigen Gases, z.B. Sauerstsoff oder Luft oder eine Mischung daraus, in einem unterstöchiometrischen Mischungsverhältnis teilweise verbrannt werden, um ein Synthesegas zu erzeugen. Als das Synthesegas wird ein Gemisch aus Kohlenmonoxid und Wasserstoff erzeugt, welches beispielsweise in Brennstoffzellen verwendet werden kann. Ferner kann dem Brennstoff und/oder dem Oxidationsmittel ein Moderator zugeführt werden, beispielsweise Wasserdampf oder Kohlendioxid, um ein Verhältnis zwischen Wasserstoff und Kohlenmonoxyd in dem erzeugten Synthesegas zu regulieren oder aus Sicherheitsgründen, um im Falle eines Fehlers bzw. einer Störung automatisch eine Spülung des Brenners durchzuführen.

Brenner zur partiellen Oxidation können als Mehrkanalbrenner mit mehreren konzentrischen Kanälen ausgebildet sein, durch welche jeweils ein Fluid geströmt werden kann. Zumeist weist ein derartiger Brenner einen zentralen Kanal und einen oder mehrere, diesen zentralen Kanal umgebende, ringförmige Kanäle auf. Ferner kann in einer Wand oder in mehreren Wänden des Brenners ein Kühlkanal für ein Kühlfluid, z.B. Wasser, zur Kühlung des Brenners vorgesehen sein.

An einem in Strömungsrichtung der Fluide betrachtet vorderen Ende des Brenners kann eine Brennerspitze vorgesehen sein, welche beispielsweise kegelstumpfförmig ausgebildet sein kann. In dieser Brennerspitze können die äußeren ringförmigen Kanäle beispielsweise unter einem vorgegebenen Neigungs- bzw. Auslasswinkel auf den zentralen Kanal zu verlaufen. Auf diese Weise können die durch die ringförmigen Kanäle geführten Fluide jeweils unter einem vorgegebenen Neigungs- bzw.

Auslasswinkel relativ zu einem Fluidstrom des zentralen Kerns aus der Brennerspitze emittiert bzw. ausgelassen werden.

Beispielsweise beschreibt die US 4 888 031 A ein Verfahren zur partiellen Oxidation mittels einer konzentrischen Brenneranordnung aus vier konzentrischen Ringkanälen und einem zentralen Kanal.

Die US 3 255 966 A offenbart beispielsweise einen Brenner zur partiellen Oxidation mit einem inneren Kanal und einem zu diesem konzentrischen, ringförmigen äußeren Kanal. In einer äußeren Wand des Brenners sind Kühlkanale für ein Kühlfluid zum Kühlen des Brenners vorgesehen.

Die US 4 865 542 A zeigt beispielsweise einen Brenner zur partiellen Oxidation mit einem inneren Kanal und zwei konzentrischen, ringförmigen Kanälen. In einer Wand des Brenners sind eine Zuleitung und eine Ableitung für eine Kühlfluid vorgesehen. Zu- und Ableitung sind über einen Spiralkanal in einer Spitze des Brenners miteinander verbunden.

Die US 3,255,966 offenbart einen Brenner gemäß dem Oberbegriff des ersten Anspruchs.

### Offenbarung der Erfindung

Vor diesem Hintergrund wird ein Brenner zum Durchführen einer partiellen Oxidation mit den Merkmalen des Patentanspruchs 1 vorgeschlagen. Vorteilhafte Ausgestaltungen sind Gegenstand der Unteransprüche sowie der nachfolgenden Beschreibung.

Der Brenner ist zum Durchführen einer partiellen Oxidation von Fluiden vorgesehen, insbesondere eines kohlenwasserstoffhaltigen Brennstoffs, z.B. Erdgas, Erdölgas oder Heizgas, und eines Oxidationsmittels, insbesondere in Form eines sauerstoffhaltigen Gases, z.B. Sauerstsoff oder Luft oder einer Mischung daraus. Der Brenner weist wenigstens zwei Kanäle auf, durch welche jeweils ein Fluid zum Durchführen der partiellen Oxidation strömbar ist. Insbesondere weist der Brenner einen zentralen Kanal und wenigstens einen, diesen zentralen Kanal umgebenden, ringförmigen Kanal auf. Zweckmäßigerweise sind die einzelnen Kanäle jeweils mit einer entsprechenden Fluidzufuhr verbindbar.

Ein Isolationselement ist an einer inneren Fläche bzw. an einer inneren Seite einer Wand von wenigstens einem Kanal der wenigstens zwei Kanäle zumindest entlang eines Teils einer axialen Länge dieses wenigstens einen Kanals angeordnet. Der jeweilige Kanal wird durch diese Wand zweckmäßigerweise radial nach außen bzw. in radialer Richtung nach außen begrenzt. Als diese Wand sei somit insbesondere eine radiale Wand bzw. Begrenzungswand des jeweiligen Kanals zu verstehen. Als die innere Fläche bzw. innere Seite sei insbesondere eine in radialer Richtung innenliegende Oberfläche dieser Wand zu verstehen. Diese innere Fläche bzw. Wandinnenfläche oder Wandinnenseite ist somit zweckmäßigerweise als die dem Fluidstrom des jeweiligen Kanals zugewandte (Ober-) Fläche der Wand zu verstehen, im Gegensatz zu der dem Fluidstrom des jeweiligen Kanals abgewandten äußeren (Ober-) Fläche bzw. Wandaußenfläche oder Wandaußenseite der Wand. Das Isolationselement, welches an dieser inneren Fläche angeordnet ist, ist somit insbesondere in direktem Kontakt mit dem durch den jeweiligen Kanal strömenden Fluid. Zweckmäßigerweise umgibt das Isolationselement den entsprechenden Kanal ringförmig.

Dieses Isolationselement ist in dem jeweiligen Kanal insbesondere vorgesehen, um ein durch den Kanal strömendes Fluid thermisch zu isolieren, zweckmäßigerweise gegenüber in radialer Richtung betrachtet weiter außen liegenden Teilen des Brenners. Insbesondere kann dieses Fluid vor thermischen Einflüssen, beispielsweise vor Wärmequellen oder Wärmesenken, in diesen weiter außen liegenden Brennerteilen isoliert bzw. abgeschirmt oder geschützt werden. Umgekehrt können diese weiter außen liegenden Brennerteile, ferner insbesondere ein durch diese Teile strömendes Fluid, vor thermischen Einflüssen des Fluids innerhalb des mit dem Isolationselement versehenen Kanals isoliert bzw. abgeschirmt oder geschützt werden. Insbesondere kann somit erreicht werden, dass das in dem entsprechenden, mit dem Isolationselement versehenen Kanal strömende Fluid weniger stark durch äußere Temperatureinflüsse erwärmt oder abgekühlt wird. Umgekehrt kann zweckmäßigerweise erreicht werden, dass ein in den weiter außen liegenden Brennerteilen strömendes Fluid weniger stark durch das in dem isolierten Kanal strömende Fluid erwärmt oder abgekühlt wird.

Insbesondere können durch das Isolationselement thermische Effekte wie Wärmeaustausch innerhalb des Brenners verringert werden. Beispielsweise kann ein gewünschter oder vorgegebener Temperaturunterschied zwischen den äußeren Brennerteilen und dem Fluid in dem isolierten Kanal aufrechterhalten werden oder es kann zumindest eine Verringerung dieses Temperaturunterschieds aufgrund von Wärmeaustausch reduziert werden. Thermische Belastungen innerhalb des Brenners, insbesondere thermische Spannungen bzw. mechanische Spannungen aufgrund von thermischen Belastungen, können zweckmäßigerweise vermieden oder zumindest verringert werden.

Die vorliegende Erfindung stellt eine besonders effektive Möglichkeit bereit, um Komponenten bzw. Fluide innerhalb des Brenners thermisch zu isolieren. Insbesondere kann somit eine Effektivität des Brenners erhöht werden. Belastungen innerhalb des Brenners können reduziert werden. Defekte und Reparaturen können vermieden werden. Wartungsintervalle können vergrößert werden. Kosten können reduziert werden. Eine Lebenszeit des Brenners und seiner einzelnen Komponenten kann erhöht werden. Durch die Anordnung des Isolationselements an der inneren Wandfläche, also innerhalb desjeweiligen Kanals, kann eine besonders platzsparende, flexible und effektive Isolation ermöglicht werden. Beispielsweise kann ein Brenner auf konstruktiv einfache und aufwandsarme Weise mit entsprechenden Isolationselementen nachgerüstet werden.

Gemäß einer besonders bevorzugten Ausgestaltung weist der Brenner ferner wenigstens einen Kühlkanal auf, durch welchen jeweils ein Kühlfluid zum Kühlen des Brenners strömbar ist. Vorteilhafterweise umgibt der wenigstens eine Kühlkanal, insbesondere in radialer Richtung betrachtet, die wenigstens zwei Kanäle ringförmig. Insbesondere ist dieser wenigstens eine Kühlkanal in einer Wand des Brenners vorgesehen und ist insbesondere in radialer Richtung betrachtet außerhalb der wenigstes zwei Kanäle angeordnet bzw. radial benachbart zu den wenigstes zwei Kanälen. Zweckmäßigerweise ist der wenigstens eine Kühlkanal mit einem Kühlfluideinlass und einem Kühlfluidauslass verbindbar, um zweckmäßigerweise kontinuierlich Kühlfluid von dem Kühlfluideinlass durch den wenigstens einen Kühlkanal zu dem Kühlfluidauslass zur Kühlung des Brenners strömen zu lassen. Beispielsweise kann Wasser als Kühlfluid verwendet werden.

Besonders vorteilhaft ist das Isolationselement an der inneren Wand des zu dem wenigstens einen Kühlkanal benachbarten Kanal der wenigstens zwei Kanäle zumindest entlang des Teils einer axialen Länge dieses benachbarten Kanals angeordnet. Der isolierte Kanal ist besonders zweckmäßig in radialer Richtung betrachtet unmittelbar benachbart zu dem wenigstens einen Kühlkanal angeordnet. Besonders zweckmäßig kann der wenigstens eine Kühlkanal diesen isolierten Kanal direkt ringförmig umgeben. Beispielsweise kann der mit dem Isolationselement versehene Kanal ein in radialer Richtung betrachtet äußerer Kanal der wenigstens zwei Kanäle sein. Beispielsweise kann der Kühlkanal in der Wand des entsprechend isolierten Kanals angeordnet sein. Ferner kann die Wand des isolierten Kanals beispielsweise der äußeren Wand des Brenners entsprechen.

Durch das Isolationselement kann besonders zweckmäßig ein Wärmetransport von dem Fluid in dem isolierten Kanal auf das Kühlfluid unterbunden oder zumindest verringert werden. Somit kann zweckmäßigerweise verhindert oder zumindest vermindert werden, dass sich das Kühlfluid aufgrund der Temperatur des durch den isolierten Kanal strömenden Fluids erwärmt. Die Kühlung des Brenners kann somit effektiver durchgeführt werden. Ferner kann insbesondere eine für die Kühlung benötigte Menge an Kühlfluid reduziert werden.

Aufgrund eines Temperaturunterschiedes zwischen der Temperatur des Kühlfluids in dem Kühlkanal und der Temperatur des Fluids in den unmittelbar benachbarten Kanal könnte es zu großen thermischen bzw. mechanischen Spannungen in der Wand dieses benachbarten Kanals kommen. Durch die Anordnung des Isolationselements an der Wandinnenfläche dieses benachbarten Kanals können derartige Spannungen in der Wand deutlich reduziert werden. Die Lebensdauer des Brenners kann somit erhöht werden.

Die einzelnen Fluide in den Brennerkanälen können beispielsweise Wasserdampf enthalten. Zweckmäßigerweise kann Wasserdampf zu dem Brennstoff hinzugefügt werden, beispielsweise um ein Verhältnis zwischen Wasserstoff und Kohlenmonoxid in dem erzeugten Synthesegas zu regulieren, oder beispielsweise aus Sicherheitsgründen, um im Falle eines Fehlers bzw. einer Störung automatisch eine Spülung des Brenners durchzuführen. Durch einen hohen Partialdruck könnte der Wasserdampf an einer kalten Wand zu einem benachbarten Kühlkanal kondensieren, wodurch Tröpfchen entstehen könnten, welche die Brennerspitze durch Erosion beschädigen könnten. Durch die Anordnung des Isolationselements an der Wandinnenfläche des zu dem Kühlkanal benachbarten Kanals kann ein derartiges Kondensieren von Wasserdampf verhindert werden. Somit kann eine Beschädigung des Brenners vermieden werden und die Lebensdauer des Brenners kann erhöht werden.

Gemäß einer bevorzugten Ausgestaltung ist der wenigstens eine Kanal dazu eingerichtet, mit einer Fluidzufuhr zur Zufuhr eines vorgewärmten Fluids und/oder eines Brennstoffs, insbesondere eines vorgewärmten Brennstoffs, verbunden zu werden. Beispielsweise kann das Fluid, insbesondere der Brennstoff, auf Temperaturen von bis zu 800°C vorgewärmt werden. Durch das Isolationselement kann zweckmäßigerweise verhindert oder zumindest verringert werden, dass sich dieses vorgewärmte Fluid aufgrund eines Temperaturunterschieds zu einem weiter außen liegenden, benachbarten Brennerteil abkühlt. Die Effizienz der Vorwärmung kann somit erhöht werden und es kann insbesondere eine für die Vorwärmung benötigte Energiemenge reduziert werden. Ferner kann eine thermische Expansion der Kanalwand aufgrund der hohen Temperaturen des Fluids kompensiert bzw. unterbunden oder zumindest reduziert werden.

Wenn besonders vorteilhaft der wenigstens eine Kühlkanal benachbart zu dem mit dem Isolationselement isolierten Kanal vorgesehen ist, kann zweckmäßigerweise eine Erwärmung des Kühlfluids aufgrund der höheren Temperatur des vorgewärmten Fluids verhindert oder zumindest reduziert werden. Umgekehrt kann besonders zweckmäßig eine Abkühlung des vorgewärmten Fluids aufgrund der geringen Temperatur des Kühlfluids reduziert oder zumindest verringert werden. Beispielsweise kann die Temperatur des Kühlfluids auf ca. 60°C begrenzt werden, wohingegen das vorgewärmte Fluid beispielsweise auf Temperaturen von bis zu ca. 800°C erwärmt wird. Durch das Isolationselement können zweckmäßigerweise Spannungen in der Wand des entsprechen Kanals aufgrund dieses hohen Temperaturunterschieds von mehreren hundert Grad vermieden bzw. verringert werden.

Vorzugsweise ist das Isolationselement aus dem wenigstens einen Kanal entfernbar bzw. austauschbar. Das Isolationselement lässt sich insbesondere auf konstruktiv einfache und aufwandsarme Weise bei Beschädigungen oder zu Wartungs-, Reinigungs- oder Reparaturarbeiten entfernen und wieder einsetzen bzw. durch ein neues Isolationselement austauschen. Insbesondere ist das Isolationselement daher nicht fest mit der Wand des wenigstens einen Kanals verbunden. Zweckmäßigerweise kann das Isolationselement in den entsprechenden Kanal eingeschoben sein. Insbesondere kann das Isolationselement innerhalb des entsprechenden Kanals axial verschiebbar sein. Somit kann bei Bedarf die axiale Position des Isolationselements relativ zu dem Kanal bzw. relativ zu dem Brenner verändert und angepasst werden.

Bevorzugt ist das Isolationselement in dem wenigstens einen Kanal wenigstens von einem in Strömungsrichtung betrachtet hinteren Ende des wenigstens einen Kanals bis zu einer Position angeordnet, die in einem vorgebbaren oder vorgegebenen axialen Abstand von einem in Strömungsrichtung betrachtet vorderen Ende des wenigstens einen Kanals entfernt ist. Das vordere Ende entspricht dabei insbesondere einem Ende der Brennerspitze, an welchem die einzelnen Fluide aus dem Brenner emittiert bzw. ausgelassen werden. Insbesondere kann diese axiale Position, bis zu welcher sich das Isolationselement erstreckt, konstruktiv bedingt sein oder beispielsweise abhängig von thermischen, thermodynamischen oder strömungsdynamischen Bedingungen innerhalb des entsprechenden Kanals vorgegeben werden.

Alternativ oder zusätzlich ist das Isolationselement in dem wenigstens einen Kanal vorzugsweise wenigstens von einem Fluidanschluss zum Zuführen eines Fluids in den wenigstens einen Kanal bis zu einer Position angeordnet, die in einem vorgebbaren oder vorgegebenen axialen Abstand von einem in Strömungsrichtung betrachtet vorderen Ende des wenigstens einen Kanals entfernt ist. Insbesondere kann das Fluid innerhalb des entsprechenden Kanals somit von dem Fluidanschluss ab isoliert werden, also zweckmäßigerweise ab derjenigen axialen Position, an welcher das Fluid in den Kanal geleitet wird.

Bevorzugt erstreckt sich das Isolationselement in dem wenigstens einen Kanal in axialer Richtung bis zu einer Brennerspitze, insbesondere bis zu einem in Strömungsrichtung betrachteten Beginn der Brennerspitze. Zweckmäßigerweise entspricht die obig erläuterte Position in dem vorgebbaren axialen Abstand von dem vorderen Ende des Kanals, bis zu welcher das Isolationselement angeordnet ist, zweckmäßigerweise dem Beginn der Brennerspitze. Die Brennerspitze kann beispielsweise kegelstumpfförmig ausgebildet sein kann. In der Brennerspitze können die ringförmigen Kanäle besonders zweckmäßig unter einem vorgegebenen Neigungs- bzw. Auslasswinkel auf den zentralen Kanal zu verlaufen. Insbesondere kann das Isolationselement in einem axialen Bereich des jeweiligen Kanals angeordnet sein, in welchem dieser Kanal bzw. dessen Wand parallel oder zumindest im Wesentlichen parallel zu einer Längsachse des Brenners bzw. zu einer Längsachse des zentralen Kanals verläuft. Zweckmäßigerweise erstreckt sich das Isolationselement innerhalb des jeweiligen Kanals bis zu derjenigen Position, ab welcher der Kanal bzw. dessen Wand abknickt und unter dem entsprechenden Neigungs- bzw. Auslasswinkel auf den zentralen Kanal zu verläuft.

Vorzugsweise ist das Isolationselement als ein Rohr oder als ein rohrförmiges Element ausgebildet. Insbesondere wird somit ein einfaches Einführen und Entfernen des Isolationselements in den jeweiligen Kanal bzw. aus dem Kanal heraus ermöglicht, welcher zweckmäßigerweise ebenfalls durch ein Rohr bzw. ein rohrförmiges Element gebildet wird. Eine Form des Isolationselements und eine Form des jeweiligen Kanals bzw. eine Form des Kanals entlang des jeweiligen Teils, in welchem das Isolationselement angeordnet ist, entsprechen einander besonders zweckmäßig oder entsprechen einander zumindest im Wesentlichen. Besonders zweckmäßig entspricht dabei, zumindest im Wesentlichen, eine Form einer äußeren Fläche einer Wand des Isolationselements einer Form der inneren Fläche der Wand des Kanals. Das Isolationselement kann somit zweckmäßigerweise passgenau bzw. formschlüssig in den Kanal eingeführt werden, so dass keine feste Verbindung benötigt wird und das Isolationselement wieder einfach entfernt werden kann.

Das Isolationselement ist aus einem thermisch isolierenden Material gefertigt. Insbesondere kann das thermisch isolierende Material hohen Temperaturen standhalten, welche das Fluid innerhalb des entsprechenden Kanals aufweisen kann, und ferner insbesondere hohen Temperaturunterschieden zwischen der Temperatur des Fluids innerhalb des Kanals und einer Temperatur außerhalb des Kanals, zweckmäßigerweise einer Temperatur eines Kühlfluids außerhalb des Kanals.

Das Isolationselement ist aus einem Mica-Material bzw. Glimmer-Material gefertigt. Mica bzw. Glimmer ist ein Mineral, das hauptsächlich aus Silizium (Si), Aluminium (Al), Magnesium (Mg) und Kalium (K) besteht. Die Struktur wird durch viele Schichten von blattartigen Rahmenschichten gebildet, die aus Si-, Al- (oder Mg-) Oxiden und K-lonenschichten bestehen. Da Mica ein natürliches, anorganisches Mineral ist, besitzt es sehr gute Hitzebeständigkeitseigenschaften und eignet sich in besonders vorteilhafter Weise als Material für das das Isolationselement. Beispielsweise kann das Isolationselement aus Muscovit oder Phlogopit oder aus einem Muscovit- und/oder Phlogopit-enthaltenden Material gefertigt sein. Muskovit, KAl₂(Si₃Al)O₁₀(OH)₂, kann beispielsweise Temperaturen von bis zu 800°C standhalten, Phlogopit, KMg₃(Si₃Al)O₁₀(OH)₂, beispielsweise Temperaturen von bis zu 1000°C. Ferner kann das Mica-Material zweckmäßigerweise beschichtet bzw. laminiert sein, beispielsweise mit einem hochtemperaturbeständigen Silikon.

Bevorzugt liegt eine Dicke einer Wand des Isolationselements in einem Bereich zwischen 25% und 175% einer Dicke der Wand des wenigstens einen Kanals, weiter bevorzugt in einem Bereich zwischen 50% und 150% der Dicke der Wand des wenigstens einen Kanals, weiter bevorzugt in einem Bereich zwischen 75% und 125% der Dicke der Wand des wenigstens einen Kanals. Als Dicke sei dabei insbesondere eine Dimension der jeweiligen Wand in radialer Richtung zu verstehen.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

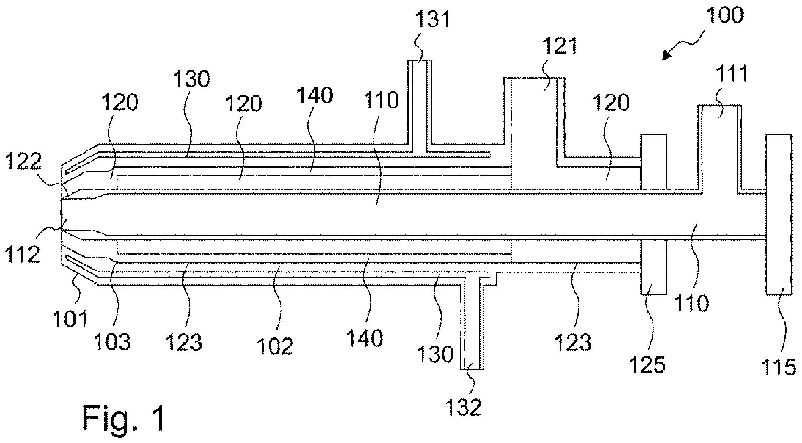

Figur 1 zeigt eine bevorzugte Ausgestaltung eines erfindungsgemäßen Brenners in einer schematischen Schnittansicht.

### Ausführungsform(en) der Erfindung

Figur 1 zeigt in einer schematischen Schnittansicht eine bevorzugte Ausgestaltung eines erfindungsgemäßen Brenners 100 zum Durchführen einer partiellen Oxidation.

Der Brenner 100 ist als ein Mehrkanalbrenner ausgestaltet und umfasst einen zentralen Kanal 110 und einen, diesen zentralen Kanal 110 umgebenden, ringförmigen Kanal 120. Durch die Kanäle 110, 120 kann jeweils ein Fluid zum Durchführen der partiellen Oxidation geströmt werden. Zu diesem Zweck können die beiden Kanäle 110, 120 jeweils über einen entsprechenden Fluideinlass bzw. Fluidanschluss 111, 121 mit einer entsprechenden Fluidzufuhr verbunden werden, so dass jeweils ein entsprechendes Fluid von dem Fluideinlass 111 bzw. 121 zu einem Fluidauslass 112 bzw. 122 in einer Brennerspitze 101 strömen kann. An einem dem Fluidauslass 112 bzw. 122 entgegengesetzten Ende des zentralen bzw. ringförmigen Kanals 110 bzw. 120 ist jeweils beispielsweise ein verschließbarer Flanschanschluss 115, 125 vorgesehen.

Durch diese Fluidauslässe 112 und 122 werden die jeweiligen Fluide aus dem Brenner emittiert, um im Zuge einer partiellen Oxidation ein Synthesegas in Form eines Gemischs aus Kohlenmonoxid und Wasserstoff zu erzeugen. In der kegelstumpfförmigen Brennerspitze 101 verläuft der ringförmige Kanal 120 unter einem vorgegebenen Neigungs- bzw. Auslasswinkel auf den zentralen Kanal 110 zu, so dass das jeweilig Fluid aus dem Fluidauslass 122 unter diesem entsprechenden Neigungs- bzw. Auslasswinkel relativ zu dem Fluidstrom aus dem Fluidauslass 112 des zentralen Kanals 110 emittiert wird.

Beispielsweise kann durch den zentralen Kanal 110 ein Oxidationsmittel in Form eines sauerstoffhaltigen Gases geleitet werden, z.B. Sauerstsoff oder Luft oder ein LuftSauerstoff-Gemisch. Durch den ringförmigen Kanal 120 kann beispielsweise ein vorgewärmter, kohlenwasserstoffhaltiger Brennstoff geleitet werden, z.B. Erdgas. Insbesondere kann der Brennstoff dabei auf Temperaturen von bis zu 800°C vorgewärmt sein. Zu diesem Zweck kann der zentrale Kanal 110 über seinen Fluideinlass bzw. Fluidanschluss 111 beispielsweise mit einer Oxidationsmittelzufuhr verbunden werden und der ringförmige Kanal 120 über den Fluideinlass bzw. Fluidanschluss 121 beispielsweise mit einer Brennstoffzufuhr. Ferner können der zugeführte Brennstoff und/oder das zugeführte sauerstoffhaltige Gas jeweils einen Moderator z.B. in Form von Wasserdampf enthalten, um ein Verhältnis zwischen Wasserstoff und Kohlenmonoxyd in dem erzeugten Synthesegas zu regulieren und/oder um im Falle eines Fehlers bzw. einer Störung automatisch eine Spülung des Brenners 100 durchzuführen.

In einer Wand 102 des Brenners 100 ist ferner ein Kühlkanal 130 für ein Kühlmittel zum Kühlen des Brenners 100 vorgesehen. Ein Kühlfluideinlass 131 kann mit einer Kühlmittelzufuhr verbunden werden, so dass kontinuierlich ein Kühlfluid, z.B. Wasser, von dem Kühlfluideinlass 131 durch den Kühlkanal 130 zu einem Kühlfluidauslass 132 geströmt werden kann. Beispielsweise kann dabei eine Temperatur des Kühlfluids maximal 60°C betragen.

Um einen Wärmeaustausch zwischen dem vorgewärmtem Brennstoff innerhalb des ringförmigen Kanals 120 und dem Kühlfluid innerhalb des Kühlkanals 130 zu verhindern oder zumindest zu reduzieren, ist ein Isolationselement 140 an einer inneren Fläche 123 einer Wand 102 des ringförmigen Kanals 120 angeordnet. Beispielsweise kann diese Wand 102 des ringförmigen Kanals 120 der Wand 102 des Brenners 100 entsprechen, in welcher der Kühlkanal 130 vorgesehen ist.

Durch das Isolationselement 140 kann der vorgewärmte Brennstoff innerhalb des ringförmigen Kanals 120 thermisch isoliert werden, so dass der Brennstoff nicht oder zumindest kaum durch das Kühlfluid in dem Kühlkanal 130 abgekühlt wird und dass umgekehrt das Kühlfluid nicht oder zumindest kaum durch den Brennstoff erwärmt wird. Ferner können thermische Belastungen und mechanischen Spannungen innerhalb der Brennerwand 102 aufgrund des Temperaturunterschieds zwischen dem Brennstoff und dem Kühlfluid vermieden oder zumindest verringert werden. Die Lebensdauer des Brenners 100 kann somit erhöht werden.

Wenn der zugeführte Brennstoff Wasserdampf enthält, könnte der Wasserdampf durch seinen hohen Partialdruck an der Wandinnenfläche 123 des ringförmigen Kanals 120 kondensieren, wodurch Tröpfchen entstehen könnten, welche die Brennerspitze 101 durch Erosion beschädigen könnten. Durch das an dieser inneren Fläche 123 angeordnete Isolationselement 140 können ein derartiges Kondensieren von Wasserdampf und entsprechende Beschädigung des Brenners 100 vermieden werden und die Lebensdauer des Brenners 100 kann erhöht werden.

Dieses Isolationselement 140 ist zumindest entlang eines Teils einer axialen Länge des ringförmigen Kanals 120 angeordnet. Beispielsweise kann sich das Isolationselement 140 wenigstens von dem Fluideinlass 121 bis zu einer Position 103 erstrecken, die in einem vorgebbaren axialen Abstand von einem in Strömungsrichtung betrachtet vorderen Ende des ringförmigen Kanals 120 entfernt ist. Beispielsweise kann diese Position 103 einem Beginn der Brennerspitze 101 entsprechen.

Das Isolationselement 140 ist beispielsweise rohrförmig ausgebildet. Insbesondere entspricht eine Form des Isolationselements 140 bzw. eine Form der in radialer Richtung betrachtet äußeren (Ober-) Fläche des Isolationselements 140 einer Form des ringförmigen Kanals 120 bzw. der inneren (Ober-) Fläche 123 der Wand 102 des ringförmigen Kanals 120, zumindest im Wesentlichen. Insbesondere kann das Isolationselement 140 somit axial in den ringförmigen Kanal 120 eingeschoben werden und kann flexibel wieder aus dem Kanal 120 entfernt werden, beispielsweise durch den Flanschanschluss 125.

Das Isolationselement 140 ist aus einem Mica- bzw. Glimmer-Material, beispielsweise aus einem Muscovit- und/oder Phlogopit-enthaltenden Material.

Ferner besteht auch die Möglichkeit, ein entsprechendes Isolationselement alternativ oder zusätzlich an der inneren Fläche der Wand des zentralen Kanals 110 anzuordnen. Es versteht sich, dass der Brenner auch mehrere ringförmige Kanäle zum Zuführen von Fluiden aufweisen kann, welche den zentralen Kanal 110 und den ringförmigen Kanal 120 konzentrisch umgeben können. Beispielsweise können mehrere oder auch alle dieser ringförmigen Kanäle jeweils ein entsprechendes Isolationselement aufweisen, welches an der Wandinnenfläche des jeweiligen Kanals angeordnet ist. Ferner ist es beispielsweis auch denkbar, dass ein Isolationselement nur in dem radial betrachtet äußersten ringförmigen Kanal angeordnet ist, welcher in radialer Richtung unmittelbar zu dem Kühlkanal benachbart ist.

### Bezugszeichenliste

- 100: Brenner zur partiellen Oxidation
- 101: Brennerspitze
- 102: Wand des Brenners
- 103: Beginn der Brennerspitze
- 110: zentraler Kanal
- 111: Fluideinlass
- 112: Fluidauslass
- 115: Flanschanschluss
- 120: ringförmiger Kanal
- 121: Fluideinlass
- 122: Fluidauslass
- 123: innere Fläche der Wand des ringförmigen Kanals
- 125: Flanschanschluss
- 130: Kühlkanal
- 131: Kühlfluideinlass
- 132: Kühlfluidauslass
- 140: Isolationselement

## Patentansprüche

1. Brenner (100) zum Durchführen einer partiellen Oxidation mit wenigstens zwei Kanälen (110, 120), die insbesondere als ein zentraler Kanal (110) und als wenigstens ein, den zentralen Kanal umgebender, ringförmiger Kanal (120) ausgebildet sind, durch welche zum Durchführen der partiellen Oxidation jeweils ein Fluid strömbar ist, wobei ein Isolationselement (140) an einer inneren Fläche (123) einer Wand (102) von wenigstens einem Kanal (120) der wenigstens zwei Kanäle (110, 120) zumindest entlang eines Teils einer axialen Länge dieses wenigstens einen Kanals (140) angeordnet ist, **dadurch gekennzeichnet, dass** das Isolationselement (140) aus einem Mica-Material gefertigt ist.

2. Brenner (100) nach Anspruch 1, ferner aufweisend wenigstens einen Kühlkanal (130), durch welchen jeweils ein Kühlfluid (130) zum Kühlen des Brenners strömbar ist, wobei der wenigstens eine Kühlkanal (130) die wenigstens zwei Kanäle (110, 120) ringförmig umgibt, wobei das Isolationselement (140) an der inneren Fläche (123) der Wand (102) des zu dem wenigstens einen Kühlkanal (130) benachbarten Kanals (120) der wenigstens zwei Kanäle (110, 120) zumindest entlang des Teils einer axialen Länge dieses benachbarten Kanals (120) angeordnet ist.

3. Brenner (100) nach Anspruch 1 oder 2, wobei der wenigstens eine Kanal (120) dazu eingerichtet ist, mit einer Fluidzufuhr zur Zufuhr eines vorgewärmten Fluids und/oder eines Brennstoffs, insbesondere eines vorgewärmten Brennstoffs, verbunden zu werden.

4. Brenner (100) nach einem der vorstehenden Ansprüche, wobei das Isolationselement (140) aus dem wenigstens einen Kanal (120) entfernbar ist.

5. Brenner (100) nach einem der vorstehenden Ansprüche, wobei das Isolationselement (140) in dem wenigstens einen Kanal (120) wenigstens von einem in Strömungsrichtung betrachtet hinteren Ende des wenigstens einen Kanals (120) bis zu einer Position (103) angeordnet ist, die in einem vorgebbaren axialen Abstand von einem in Strömungsrichtung betrachtet vorderen Ende (122) des wenigstens einen Kanals (120) entfernt ist, und/oder wobei das Isolationselement (140) in dem wenigstens einen Kanal (120) wenigstens von einem Fluidanschluss (121) zum Zuführen eines Fluids in den wenigstens einen Kanal (120) bis zu einer Position (103) angeordnet ist, die in einem vorgebbaren axialen Abstand von einem in Strömungsrichtung betrachtet vorderen Ende (122) des wenigstens einen Kanals (120) entfernt ist.

6. Brenner (100) nach einem der vorstehenden Ansprüche, wobei sich das Isolationselement (140) in dem wenigstens einen Kanal (120) in axialer Richtung bis zu einer Brennerspitze (101) erstreckt.

7. Brenner (100) nach einem der vorstehenden Ansprüche, wobei das Isolationselement (140) als ein Rohr oder rohrförmiges Element ausgebildet ist.

8. Brenner (100) nach einem der vorstehenden Ansprüche, wobei das Isolationselement (140) aus einem thermisch isolierenden Material gefertigt ist.

9. Brenner (100) nach einem der vorstehenden Ansprüche, wobei eine Dicke einer Wand des Isolationselements (140) in einem Bereich zwischen 25% und 175% einer Dicke der Wand (102) des wenigstens einen Kanals (120) liegt, insbesondere in einem Bereich zwischen 50% und 150% der Dicke der Wand (102) des wenigstens einen Kanals (120), insbesondere in einem Bereich zwischen 75% und 125% der Dicke der Wand (102) des wenigstens einen Kanals (120).

## Claims

1. A burner (100) for implementing partial oxidation, having at least two channels (110, 120), which are in particular designed as one central channel (110) and at least one annular channel (120) surrounding the central channel, through each of which a fluid can flow to implement the partial oxidation, an insulation element (140) being arranged on an inner face (123) of a wall (102) of at least one channel (120) of the at least two channels (110, 120) at least along part of an axial length of this at least one channel (140), **characterized in that** the insulation element (140) is made of a mica material.

2. The burner (100) according to claim 1, further having at least one cooling channel (130), through each of which a cooling fluid (130) for cooling the burner can flow, wherein the at least one cooling channel (130) annularly surrounds the at least two channels (110, 120), wherein the insulation element (140) is arranged on the inner face (123) of the wall (102) of the channel (120) of the at least two channels (110, 120) adjacent to the at least one cooling channel (130), at least along part of an axial length of this adjacent channel (120).

3. The burner (100) according to claim 1 or 2, wherein the at least one channel (120) is configured to be connected to a fluid supply for supplying a preheated fluid and/or a fuel, in particular a preheated fuel.

4. The burner (100) according to any of the preceding claims, wherein the insulation element (140) is removable from the at least one channel (120).

5. The burner (100) according to any of the preceding claims, wherein the insulation element (140) is arranged in the at least one channel (120) at least from a rear end of the at least one channel (120) as viewed in the flow direction to a position (103) which is at a predeterminable axial distance from a front end (122) of the at least one channel (120) as viewed in the flow direction, and/or wherein the insulation element (140) is arranged in the at least one channel (120) at least from a fluid port (121) for supplying a fluid into the at least one channel (120) to a position (103) which is at a predeterminable axial distance from a front end (122) of the at least one channel (120) as viewed in the flow direction.

6. The burner (100) according to any of the preceding claims, wherein the insulation element (140) extends in the at least one channel (120) in the axial direction up to a burner tip (101).

7. The burner (100) according to any of the preceding claims, wherein the insulation element (140) is designed as a tube or tubular element.

8. The burner (100) according to any of the preceding claims, wherein the insulation element (140) is made of a thermally insulating material.

9. The burner (100) according to any of the preceding claims, wherein a thickness of a wall of the insulation element (140) is in a range of between 25% and 175% of a thickness of the wall (102) of the at least one channel (120), in particular in a range of between 50% and 150% of the thickness of the wall (102) of the at least one channel (120), in particular in a range of between 75% and 125% of the thickness of the wall (102) of the at least one channel (120).

## Revendications

1. Brûleur (100) pour la mise en œuvre d'une oxydation partielle comportant au moins deux canaux (110, 120) réalisés en particulier sous forme de canal central (110) et sous forme d'au moins un canal annulaire (120) entourant le canal central, à travers lesquels respectivement un fluide peut s'écouler pour la mise en œuvre de l'oxydation partielle, dans lequel un élément isolant (140) est disposé sur une surface intérieure (123) d'une paroi (102) d'au moins un canal (120) parmi les au moins deux canaux (110, 120), au moins le long d'une partie d'une longueur axiale dudit au moins un canal (140), **caractérisé en ce que** l'élément isolant (140) est fabriqué en un matériau de mica.

2. Brûleur (100) selon la revendication 1, présentant en outre au moins un canal de refroidissement (130) à travers lequel respectivement un fluide de refroidissement (130) peut s'écouler pour le refroidissement du brûleur, dans lequel l'au moins un canal de refroidissement (130) entoure de manière annulaire les au moins deux canaux (110, 120), dans lequel l'élément isolant (140) est disposé sur la surface intérieure (123) de la paroi (102) du canal (120) adjacent à l'au moins un canal de refroidissement (130) parmi les au moins deux canaux (110, 120), au moins le long de la partie d'une longueur axiale dudit canal (120) adjacent.

3. Brûleur (100) selon la revendication 1 ou 2, dans lequel l'au moins un canal (120) est conçu pour être raccordé à une alimentation en fluide pour l'alimentation d'un fluide préchauffé et/ou d'un combustible, en particulier d'un combustible préchauffé.

4. Brûleur (100) selon l'une des revendications précédentes, dans lequel l'élément isolant (140) peut être retiré de l'au moins un canal (120).

5. Brûleur (100) selon l'une des revendications précédentes, dans lequel l'élément isolant (140) est disposé dans l'au moins un canal (120) au moins depuis une extrémité arrière, vue dans le sens de l'écoulement, de l'au moins un canal (120) jusqu'à une position (103) qui est éloignée d'une distance axiale pouvant être prédéfinie d'une extrémité avant (122), vue dans le sens de l'écoulement, de l'au moins un canal (120), et/ou dans lequel l'élément isolant (140) est disposé dans l'au moins un canal (120) au moins à partir d'un raccord pour fluide (121) pour l'alimentation d'un fluide dans l'au moins un canal (120) jusqu'à une position (103) qui est éloignée d'une distance axiale pouvant être prédéterminée d'une extrémité avant (122), vue dans le sens de l'écoulement, de l'au moins un canal (120).

6. Brûleur (100) selon l'une des revendications précédentes, dans lequel l'élément isolant (140) s'étend dans l'au moins un canal (120) dans la direction axiale jusqu'à une pointe de brûleur (101).

7. Brûleur (100) selon l'une des revendications précédentes, dans lequel l'élément isolant (140) est réalisé sous forme de tube ou d'élément tubulaire.

8. Brûleur (100) selon l'une des revendications précédentes, dans lequel l'élément isolant (140) est fabriqué dans un matériau thermiquement isolant.

9. Brûleur (100) selon l'une des revendications précédentes, dans lequel une épaisseur d'une paroi de l'élément isolant (140) se situe dans une plage comprise entre 25 % et 175 % d'une épaisseur de la paroi (102) de l'au moins un canal (120), en particulier dans une plage comprise entre 50 % et 150 % de l'épaisseur de la paroi (102) de l'au moins un canal (120), en particulier dans une plage comprise entre 75 % et 125 % de l'épaisseur de la paroi (102) de l'au moins un canal (120).
